# FASCICULE DE BREVET EUROPEEN

(11) **EP 3 720 383 B1**
(45) Date de publication et mention de la délivrance du brevet: **02.02.2022**
(21) Numéro de dépôt: 18830922.3
(22) Date de dépôt: 05.12.2018
(51) Int. Cl.: A61D 19/02

(54) **PAILLETTE POUR LA CONSERVATION CRYOGÉNIQUE D'UNE DOSE DE SUBSTANCE À BASE LIQUIDE, ENSEMBLE LA COMPORTANT ET PROCÉDÉ DE VIDAGE DE CETTE PAILLETTE**
RÖHRCHEN ZUR KRYOGENEN KONSERVIERUNG EINER DOSIS EINER FLÜSSIGKEITSBASIERTEN SUBSTANZ, ANORDNUNG DAMIT UND VERFAHREN ZUM ENTLEEREN DIESES RÖHRCHENS
STRAW FOR CRYOGENIC PRESERVATION OF A DOSE OF LIQUID-BASED SUBSTANCE, ASSEMBLY COMPFRISING SAME, AND METHOD FOR EMPTYING THIS STRAW

(30) Priorité: 05.12.2017 FR 1761670
(43) Date de publication de la demande: 14.10.2020
(73) Titulaire: IMV Technologies, 61300 Saint-Ouen-Sur-Iton (FR)
(72) Inventeur: SCHMITT, Eric, 53700 Villaines-La-Juhel (FR); GORGES, Jean-Charles, 72610 Chenay (FR); GUYOMAR, Hélène, 61560 Saint Germain De Martigny (FR)
(74) Mandataire: Santarelli
(86) Numéro de dépôt international: PCT/FR2018/053116
(87) Numéro de publication internationale: WO 2019/110927

(56) Documents cités:
- EP-A1- 0 278 823
- WO-A1-2016/193630

## Description

### DOMAINE DE L'INVENTION

L'invention a trait d'une manière générale à la conservation d'une dose prédéterminée de substance à base liquide, et plus particulièrement aux paillettes pour effectuer une telle conservation.

### ARRIERE-PLAN TECHNOLOGIQUE

On sait qu'une telle paillette comporte un tube et un bouchon disposé dans le tube. Le bouchon est habituellement du type tripartite décrit à l'origine dans le brevet français 995.878, correspondant au brevet britannique 669,265, c'est-à-dire formé par deux tampons en substance fibreuse enserrant une poudre se transformant au contact d'un liquide en une pâte ou gel imperméable adhérant à la paroi du tube pour que le bouchon soit étanche aux liquides. Des bouchons semblables mais perfectionnés sont décrits par les demandes de brevet français 2 824 255 et 2 824 256, correspondant aux demandes de brevet américains 2002/0183653 et 2002/0188222. Des bouchons d'un autre type sont également connus, par exemple un bouchon comportant ou associé à un insert décrit par la demande de brevet français 2 771 284 correspondant au brevet américain 6,300,125, par la demande de brevet français 2 771 285 correspondant à la demande de brevet américain 2001/0014376, par la demande de brevet français 2 784 572 correspondant au brevet américain 6,416,611 et par la demande de brevet français 2 932 064 ; ou encore un bouchon fait d'un cylindre monobloc de matière microporeuse hydrophobe décrit par la demande de brevet européen 0 873 726 ; ou enfin un bouchon fait d'un cylindre monobloc de matière microporeuse auto-scellante frittée décrit par la demande PCT WO 2010/070533.

A l'état initial, le bouchon est disposé au voisinage de l'une des extrémités du tube et il est prévu qu'à l'état rempli, la dose de substance liquide qui doit être conservée dans la paillette soit disposée entre le bouchon et l'autre extrémité du tube (extrémité la plus éloignée du bouchon). Pour remplir la paillette, l'extrémité la plus proche du bouchon est mise en communication avec une source de vide tandis que l'extrémité la plus éloignée du bouchon est mise en communication avec un récipient contenant la substance à introduire dans la paillette. L'air initialement contenu entre le bouchon et l'extrémité du tube la plus éloignée du bouchon est aspiré au travers du bouchon tandis que la substance progresse dans le tube jusqu'à ce qu'elle rencontre le bouchon.

Le cas échéant, après remplissage, la paillette est soudée au voisinage de l'une ou de ses deux extrémités et est stockée au froid. La paillette et notamment la matière du tube sont prévus pour que ce stockage au froid puisse s'effectuer en plongeant la paillette dans un agent cryogénique liquide tel que de l'azote liquide.

Pour vider la paillette, le cas échéant après découpage des portions d'extrémité soudées et décongélation, on fait pénétrer dans le tube par l'extrémité la plus proche du bouchon une tige qui vient porter contre le bouchon. Avec cette tige, on fait coulisser le bouchon à la façon d'un piston vers l'extrémité la plus éloignée du bouchon, ce qui provoque l'expulsion de la dose de substance qui avait été introduite dans la paillette. Lorsque la paillette est utilisée pour conserver de la semence animale diluée, en particulier de la semence bovine, le vidage de la paillette est mis en œuvre pour opérer une insémination artificielle.

On a déjà proposé (voir la demande de brevet français 3 036 954 à laquelle correspond le demande internationale WO 2016/193630) une paillette semblable mais dont le bouchon :
- est fixe vis-à-vis du tube ;
- comporte un embout de raccordement mâle s'étendant entre une première extrémité tournée vers la première extrémité du tube et une seconde extrémité tournée vers la seconde extrémité du tube, présentant une surface externe tronconique normalisée augmentant de diamètre de la première extrémité de l'embout vers la seconde extrémité de l'embout, configuré pour qu'une aiguille de seringue ayant un embout de raccordement femelle à surface interne tronconique normalisée puisse être raccordée au bouchon par engagement de l'embout de raccordement femelle de l'aiguille sur l'embout de raccordement mâle du bouchon avec la surface tronconique interne de l'embout femelle au contact de la surface tronconique externe de l'embout mâle ; et
- comporte un conduit interne s'étendant entre la première extrémité de l'embout et la seconde extrémité du bouchon.

Le conduit interne de l'aiguille de seringue peut ainsi être mis en communication, par l'intermédiaire du conduit interne du bouchon, avec l'espace interne au tube situé entre la seconde extrémité du bouchon et la seconde extrémité du tube.

Cet espace interne au tube est prévu, comme dans les paillettes conventionnelles, pour recevoir la dose prédéterminée de substance à base liquide.

Si l'on raccorde une aiguille de seringue (par exemple une aiguille d'injection) sur l'embout du bouchon et que l'on entraîne la dose de substance contenue dans la paillette vers le bouchon, la substance passera au travers du conduit interne du bouchon puis du conduit interne de l'aiguille et pourra être expulsée à l'extrémité distale de l'aiguille, c'est-à-dire l'extrémité pointue située du côté opposé à l'embout femelle de l'aiguille.

Une telle paillette peut ainsi jouer non seulement le rôle d'un élément de conditionnement de la dose de substance permettant sa conservation, y compris aux températures cryogéniques (rôle classique pour une paillette), mais aussi le rôle d'un corps de seringue auquel peut être directement raccordée une aiguille de seringue et dont le contenu peut être éjecté au travers de l'extrémité distale de cette aiguille.

### OBJET DE L'INVENTION

L'invention vise à fournir une paillette semblable mais encore plus simple et commode pour l'utilisateur.

L'invention propose à cet effet une paillette pour la conservation cryogénique d'une dose prédéterminée de substance à base liquide, comportant un tube s'étendant entre une première extrémité et une seconde extrémité, et un bouchon disposé dans ledit tube au voisinage de sa première extrémité et s'étendant entre une première extrémité tournée vers la première extrémité dudit tube et une seconde extrémité tournée vers la seconde extrémité dudit tube, ledit bouchon étant fixe par rapport audit tube et étant traversé de sa première extrémité à sa seconde extrémité par un passage ; caractérisée en ce qu'elle comporte en outre une aiguille de vidage comportant une première portion saillant de la première extrémité dudit bouchon vers la première extrémité dudit tube et s'étendant jusqu'à une extrémité distale située dans ledit tube, et comportant une deuxième portion située dans ledit passage du bouchon, ladite aiguille de vidage étant fixée de manière permanente audit bouchon par sa deuxième portion, ladite aiguille de vidage et ledit bouchon formant un insert entièrement disposé dans ledit tube et présentant un conduit interne reliant fluidiquement les espaces internes au tube situés de part et d'autre dudit insert, ledit conduit interne étant formé au moins partiellement par l'espace interne à l'aiguille de vidage, qui est creuse.

Ainsi, contrairement à la paillette antérieure susmentionnée, il n'est point besoin de disposer d'une aiguille de seringue et de raccorder cette aiguille de seringue sur l'embout du bouchon, l'aiguille de vidage étant déjà présente dans la paillette.

Cela est particulièrement simple et commode pour l'utilisateur tout en préservant sa sécurité lors des manipulations de la paillette, notamment lors de son remplissage ou de sa mise ou place et de son retrait dans un bain d'agent cryogénique, étant donné que les contacts avec l'aiguille sont empêchés par le tube, l'aiguille étant entièrement à l'intérieur de celui-ci, y compris son extrémité distale.

L'invention est basée sur l'observation qu'il est en fait possible de conserver dans un bain d'agent cryogénique conventionnel une paillette contenant une aiguille de vidage, malgré la contrainte thermique, la contrainte de longueur prédéterminée de la paillette (de l'ordre de 130 mm) imposée par les bains d'agent cryogénique conventionnels et la contrainte de contenance du volume prédéterminé de la dose de substance à conserver (par exemple 2 ml).

Il s'avère en effet possible de sélectionner la matière de l'aiguille pour qu'elle soit compatible avec les températures cryogéniques (par exemple de l'acier inoxydable AISI 304L) et de compenser la perte de longueur utile de la paillette due à la présence de l'aiguille par une augmentation de diamètre du tube, qui peut finalement être modérée (pour avoir un même volume cylindrique avec des diamètres et longueurs différents, le rapport des diamètres est la racine carrée de l'inverse du rapport des longueurs, par exemple si on divise la longueur par 4 il faut un diamètre multiplié par 2).

Selon des caractéristiques avantageuses, ladite deuxième portion de l'aiguille de vidage s'étend entre la première extrémité du bouchon et une extrémité proximale située dans le bouchon, ledit conduit interne étant formé par ledit passage entre l'extrémité proximale de l'aiguille de vidage et la seconde extrémité du bouchon.

Ainsi, la deuxième portion de l'aiguille est plus courte que le bouchon, et l'aiguille ne forme donc que partiellement le conduit interne de l'insert. La partie du conduit interne formée par le passage ménagé dans le bouchon peut ainsi présenter des dimensions indépendantes de l'aiguille.

Selon des caractéristiques avantageuses, dans un état initial de la paillette, où elle est prête à être remplie, la première extrémité dudit tube est soudée, la seconde extrémité dudit tube est ouverte, et l'espace entre la seconde extrémité dudit bouchon et la seconde extrémité dudit tube est vide.

La fermeture par soudure de la première extrémité du tube de la paillette offre à l'utilisateur tout à la fois une excellente sécurité et une excellente commodité d'emploi puisque l'utilisateur n'a plus qu'à remplir la paillette et, le cas échéant, à fermer par soudure la deuxième extrémité de la paillette.

Selon des caractéristiques avantageuses, dans l'état initial de la paillette, ledit conduit interne dudit insert est ouvert et l'espace entre la première extrémité dudit bouchon et la première extrémité dudit tube ne contient que ladite aiguille de vidage.

Du fait de la fermeture par soudure de la première extrémité du tube et du contact étanche aux gaz et aux liquides entre le tube et le bouchon, l'espace interne au tube situé entre la première extrémité du tube et la première extrémité du bouchon est fermé avec comme seule issue le conduit interne de l'insert, qui est ouvert.

Il se trouve en fait que lorsqu'on remplit la paillette, par exemple grâce à une aiguille qui est introduite dans le tube par sa seconde extrémité jusqu'à ce que le bout de l'aiguille soit proche du bouchon avec la substance qui est ensuite injectée dans le tube en même temps que l'aiguille recule, la substance ne pénètre pas, ou extrêmement peu, à l'intérieur du conduit interne de l'insert et que cela peut rester le cas, y compris si la paillette remplie est placée debout avec la première extrémité en bas, les forces capillaires dans le conduit de l'insert et/ou la compression de l'air emprisonné dans l'espace interne au tube situé entre la première extrémité du tube et la première extrémité du bouchon, s'opposant à la progression de la substance dans le conduit de l'insert.

Il n'est donc pas utile de fermer le conduit de l'insert pour éviter que la substance traverse l'insert et vienne dans l'espace interne au tube situé entre la première extrémité du tube et la première extrémité du bouchon.

Cela simplifie l'utilisation de la paillette puisque l'utilisateur n'a aucune manœuvre d'ouverture du conduit de l'insert à effectuer lorsqu'il doit vider la paillette.

Selon des caractéristiques avantageuses, dans un état rempli de la paillette, la première extrémité dudit tube est soudée, la seconde extrémité dudit tube est soudée, et l'espace entre la seconde extrémité dudit bouchon et la seconde extrémité dudit tube contient ladite dose prédéterminée de substance à base liquide.

La fermeture par soudure des deux extrémités de la paillette offre une sécurité particulièrement élevée pour la conservation cryogénique de la substance, notamment face aux contaminations croisées.

En outre, cela offre la possibilité, particulièrement simple et commode, de vider la paillette à la façon d'une ampoule, d'abord en ouvrant le tube au voisinage de la première extrémité (par exemple par découpe du tube autour du bouchon) puis au voisinage de la seconde extrémité (par exemple par perforation du tube pour le mettre à l'atmosphère), avec la substance qui reste dans le tube tant que le tube n'a pas été ouvert au voisinage de sa seconde extrémité.

Selon des caractéristiques avantageuses, pour les raisons indiquées ci-dessus, dans l'état rempli de la paillette, ledit conduit interne dudit insert est ouvert et l'espace entre la première extrémité dudit bouchon et la première extrémité dudit tube ne contient que ladite aiguille de vidage.

Selon d'autres caractéristiques avantageuses :
- ledit bouchon comporte sur sa surface externe une gorge annulaire, et comporte de ladite gorge annulaire à ladite première extrémité un appendice dont la surface externe est à l'écart de la surface interne dudit tube ; et/ou
- ledit bouchon comporte sur sa surface externe une portion cylindrique en contact serré avec la surface interne dudit tube.

L'invention vise également, sous un autre aspect, un ensemble comportant une paillette telle qu'exposée ci-dessus et un dispositif de mise à l'atmosphère de ladite paillette comportant un organe de positionnement de ladite paillette configuré pour recevoir ladite paillette dans une position prédéterminée, et un organe d'ouverture de ladite paillette configuré pour pratiquer une ouverture dans le tube de ladite paillette lorsque ladite paillette est reçue dans ledit organe de positionnement dans ladite position prédéterminée.

Grâce à ce dispositif de mise à l'atmosphère, l'utilisateur peut très commodément utiliser la paillette selon l'invention, en particulier à la façon d'une ampoule comme indiqué ci-dessus, de façon particulièrement fiable puisque la paillette est ouverte au voisinage de la seconde extrémité du tube exactement à l'endroit prévu.

Selon des caractéristiques avantageuses :
- ledit organe de positionnement comporte une gouttière configurée pour recevoir ladite paillette selon une orientation prédéterminée que ladite paillette présente lorsqu'elle est dans ladite position prédéterminée, et une paroi de butée située dans le prolongement de ladite gouttière et configurée pour limiter l'enfoncement de ladite paillette dans ladite gouttière lorsque ladite paillette est enfoncée dans ladite gouttière et atteint ladite position prédéterminée ;
- ledit organe d'ouverture comporte une aiguille de ventilation pourvue d'un canal interne et configurée pour transpercer le tube de ladite paillette de sorte à pratiquer ladite ouverture ; et ledit organe d'ouverture comporte en outre un filtre à air situé en entrée dudit canal interne ; et/ou
- ledit dispositif de mise à l'atmosphère comporte une pince pourvue d'une première mâchoire et d'une deuxième mâchoire, ladite pince présentant une configuration ouverte dans laquelle lesdites mâchoires sont à l'écart l'une de l'autre et ladite paillette peut être disposée entre lesdites mâchoires, et une configuration fermée dans laquelle lesdites mâchoires sont à proximité l'une de l'autre et sont configurées pour maintenir ladite paillette reçue dans ledit organe de positionnement dans ladite position prédéterminée, ledit organe de positionnement étant situé sur ladite première mâchoire et ledit organe d'ouverture étant situé sur ladite deuxième mâchoire, et ladite pince est configurée de sorte que ledit organe d'ouverture pratique ladite ouverture dans le tube de ladite paillette lorsque lesdites mâchoires sont rapprochées l'une de l'autre pour faire passer ladite pince de sa configuration ouverte à sa configuration fermée.

L'invention vise également, sous un autre aspect, un procédé pour vider une paillette telle qu'exposée ci-dessus, comportant les étapes de :
- sélectionner une dite paillette où la seconde extrémité dudit tube est soudée, et l'espace entre la seconde extrémité dudit bouchon et la seconde extrémité dudit tube contient ladite dose prédéterminée de substance à base liquide ;
- établir une communication fluidique entre ladite aiguille de vidage et un récipient dans lequel doit être transféré ladite dose prédéterminée de substance à base liquide, avec ladite paillette qui est disposée de sorte que l'extrémité distale de ladite aiguille de vidage est tournée vers le bas en étant au moins partiellement au-dessus dudit récipient et que la seconde extrémité dudit tube est tournée vers le haut ;
- pratiquer une ouverture dans le tube de ladite paillette pour mettre à l'atmosphère ladite dose prédéterminée de substance à base liquide, et laisser ladite substance à base liquide s'écouler de manière gravitaire au travers du conduit interne dudit insert.

Le vidage s'effectue ainsi sans avoir d'action d'entrainement de la substance à effectuer par l'utilisateur, ce qui est particulièrement simple et commode.

Au surplus, cela offre l'avantage de minimiser le stress subi par la substance qui a été conservée dans la paillette, ce qui est particulièrement avantageux lorsqu'il s'agit de substance biologique, par exemple du vaccin concentré.

Selon des caractéristiques avantageuses :
- le procédé comporte l'étape de sélectionner ladite paillette avec une bulle d'air emprisonnée entre la dose de substance à base liquide et la seconde extrémité dudit tube et l'étape de pratiquer ladite ouverture au niveau de ladite bulle d'air ; et/ou
- le procédé comporte l'étape de, avant de pratiquer ladite ouverture, enfoncer ladite aiguille de vidage dans un septum dudit récipient.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en élévation d'une paillette selon l'invention, dans un état initial où elle est vide et prête à être remplie ;
- la figure 2 en est la vue en coupe repérée par II-II sur la figure 1 ;
- la figure 3 est une vue similaire à la figure 2, mais montrant la paillette à l'état rempli ;
- la figure 4 est une vue en élévation de l'insert que comporte cette paillette ;
- la figure 5 montre l'insert tel que vu depuis le côté que l'on voit en bas sur la figure 4 ;
- la figure 6 en est la vue en coupe repérée par VI-VI sur la figure 4;
- la figure 7 est une vue similaire à la figure 3, mais pour une variante de la paillette et dans un état où elle est prête à être piquée sur un récipient où la dose prédéterminée de substance à base liquide qu'elle contient doit être transférée ;
- la figure 8 est la vue en élévation repérée par VIII sur la figure 7 ;
- la figure 9 est une vue schématique en coupe montrant la paillette de la figure 8 coopérant avec un dispositif de mise à l'atmosphère et piquée sur une poche de dilution dans laquelle doit être transférée la dose prédéterminée de substance à base liquide qu'elle contient ;
- la figure 10 est une vue montrant de façon similaire à la figure 9 le dispositif de mise à l'atmosphère et la paillette, mais dans une configuration de mise en place de la paillette dans le dispositif ;
- la figure 11 est une vue semblable à la figure 10 mais en élévation ; et
- la figure 12 montre le dispositif tel que vu depuis le côté qu'on voit en haut sur la figure 11.

### DESCRIPTION DETAILLEE D'EXEMPLES DE REALISATION

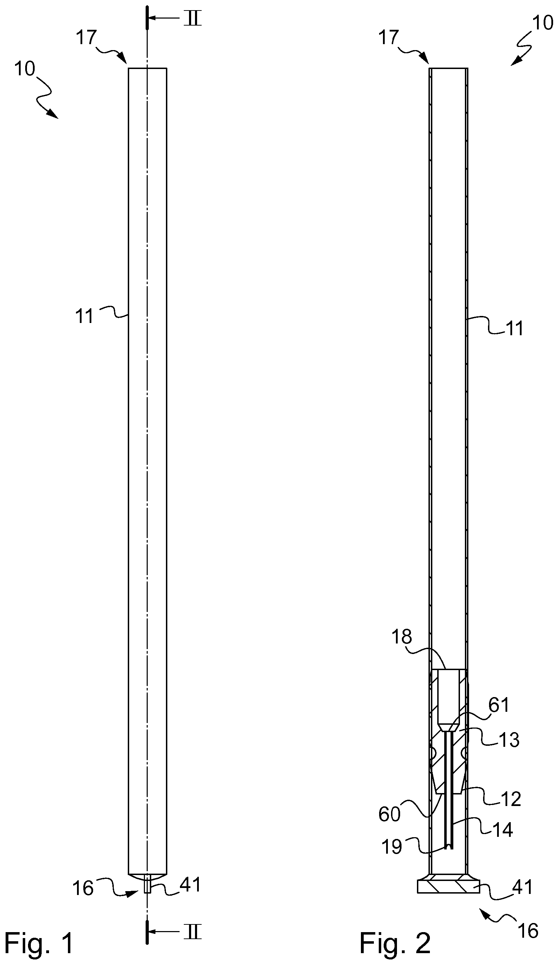

La paillette 10 illustrée sur les figures 1 et 2 comporte un tube 11 et un insert 12 entièrement disposé dans le tube 11.

Le tube 11 est en matière plastique extrudée de sorte qu'il est d'une seule pièce et présente une section constante, ici circulaire.

Ici, le diamètre interne du tube est de l'ordre de 5,50 mm et la longueur du tube 11 est de l'ordre de 130 mm.

Le tube 11 s'étend entre une première extrémité 16 (que l'on voit en bas sur les figures 1 et 2) et une seconde extrémité 17 (que l'on voit en haut sur les figures 1 et 2).

La matière du tube 11 est ici du Surlyn^{®}, qui a de bonnes propriétés de soudabilité et une excellente compatibilité avec les températures cryogéniques. Pour plus de détails, on pourra se référer à la demande de brevet français 2 651 793 à laquelle correspond le brevet américain 5,190,880.

En variante, la matière du tube est dans une autre matière plastique thermosoudable et résistante aux températures cryogéniques, par exemple du PVC, du PETG, du PCTG, du TPE ou du PP.

L'insert 12 s'étend entre une première extrémité 19 tournée vers la première extrémité 16 du tube 11 et une seconde extrémité 18 tournée vers la seconde extrémité 17 du tube 11.

L'insert 12 comporte un bouchon 13 et une aiguille de vidage 14 fixée de manière permanente au bouchon 13.

Le bouchon 13 est en une matière qui a les mêmes propriétés d'imperméabilité aux gaz et aux liquides sans et avec contact préalable du bouchon avec un liquide, notamment aqueux.

En particulier, contrairement aux bouchons conventionnels de paillette, le bouchon 13 ne comporte pas d'agent de scellement en poudre à l'état sec se transformant en pâte ou gel une fois humecté.

La matière du bouchon 13 est ici un polyester, plus précisément du poly(téréphtalate de butylène) ou PBT. En variante, le bouchon 13 est dans une autre matière thermoplastique relativement rigide, par exemple un polymère styrénique, plus précisément de l'acrylonitrile butadiène styrène (ABS).

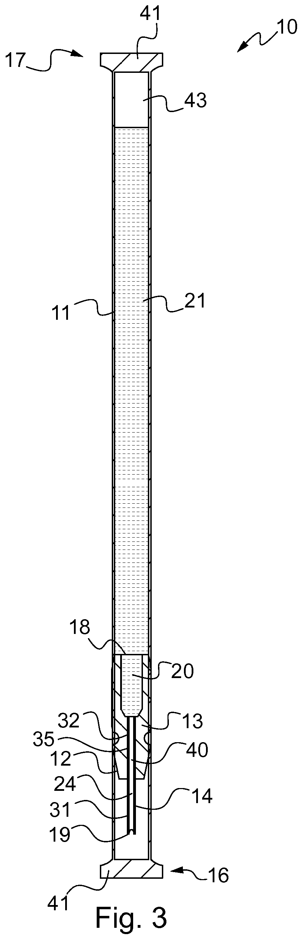

Ici, la matière du bouchon 13 a une densité telle que le poids du bouchon 13 est suffisant pour que la paillette 10, lorsqu'elle est à l'état rempli montré sur la figure 3, ne puisse pas flotter en surface lorsqu'elle est plongée dans un agent cryogénique à l'état liquide tel que l'azote.

L'aiguille 14 est du type aiguille de seringue hypodermique, mais formée uniquement par une tige creuse.

L'aiguille 14 s'étend entre une extrémité distale 19, tournée vers la première extrémité 16 du tube 11, et une extrémité proximale 61 tournée vers la seconde extrémité 17 du tube 11.

L' extrémité distale 19 est biseautée afin d'être pointue.

L'aiguille 14 présente un espace interne formant un canal interne 40 débouchant au travers de l'extrémité distale 19 et au travers de l'extrémité proximale 61.

Autrement dit, le canal interne 40 s'étend depuis l'extrémité proximale 61 de l'aiguille 14 jusqu'à l'extrémité distale 19 biseautée de l'aiguille 14.

La tige creuse a ici un diamètre externe connu comme gauge 18 ou gauge 20. La tige creuse est ici réalisée en une matière métallique, et plus précisément en acier inoxydable.

Ici, afin que la matière de l'aiguille soit compatible avec les températures cryogéniques, il s'agit d'acier inoxydable AISI 304L. On sait qu'un tel acier inoxydable est austénitique et que les aciers austénitiques présentent généralement une bonne résistance au froid, et qu'en particulier, contrairement à d'autres aciers, ils ne deviennent pas fragiles aux basses températures.

L'insert 12 est ici fabriqué par surmoulage du bouchon 13 sur une portion de l'aiguille 14. Autrement dit l'aiguille 14 est partiellement surmoulée par le bouchon 13.

Le bouchon 13 est disposé dans le tube 11 au voisinage de sa première extrémité 16. Le bouchon 13 s'étend entre une première extrémité 60 dont saille l'aiguille 14 et la seconde extrémité 18, qui est donc à la fois la seconde extrémité de l'insert 12 et la seconde extrémité du bouchon 13.

Le bouchon 13 présente un passage 35 qui le traverse de sa première extrémité 60 à sa seconde extrémité 18.

L'aiguille 14 comporte une première portion 31 qui saille du bouchon 13, et une deuxième portion 32 qui est située dans le passage 35 du bouchon 13.

L'aiguille 14 est fixée de manière permanente au bouchon 13 par sa deuxième portion 32, ici du fait que la matière du bouchon 13 est surmoulée sur l'aiguille 14.

La première portion 31 saille de la première extrémité 60 du bouchon 13 vers la première extrémité 16 du tube 11 et s'étend jusqu'à l'extrémité distale 19, qui est donc à la fois la première extrémité de l'aiguille 14 et la première extrémité de l'insert 12.

La deuxième portion 32 s'étend depuis la première extrémité 60 du bouchon 13 jusqu'à l'extrémité proximale 61.

L'extrémité 61 de l'aiguille 14 est ici située dans le bouchon 13, et plus précisément dans son passage 35.

Le canal interne 40 de l'aiguille 14 débouche ainsi à l'extrémité proximale 61 de l'aiguille 14, dans la portion du passage 35 située entre l'extrémité proximale 61 et la seconde extrémité 18, laquelle portion du passage 35 forme un conduit interne 20 du bouchon 13.

Ainsi, l'aiguille 14 est en communication fluidique avec le conduit interne 20 du bouchon 13.

Le diamètre du canal interne 40 est ici de l'ordre de 0,84 mm.

D'une façon générale le bouchon 13 a une configuration axisymétrique et il est disposé coaxialement au tube 11.

Le bouchon 13 est directement assujetti au tube 11.

L'aiguille 14 est assujettie au tube 11 uniquement par l'intermédiaire du bouchon 13.

Ainsi, le tube 11 laisse libre la surface externe de l'aiguille 14.

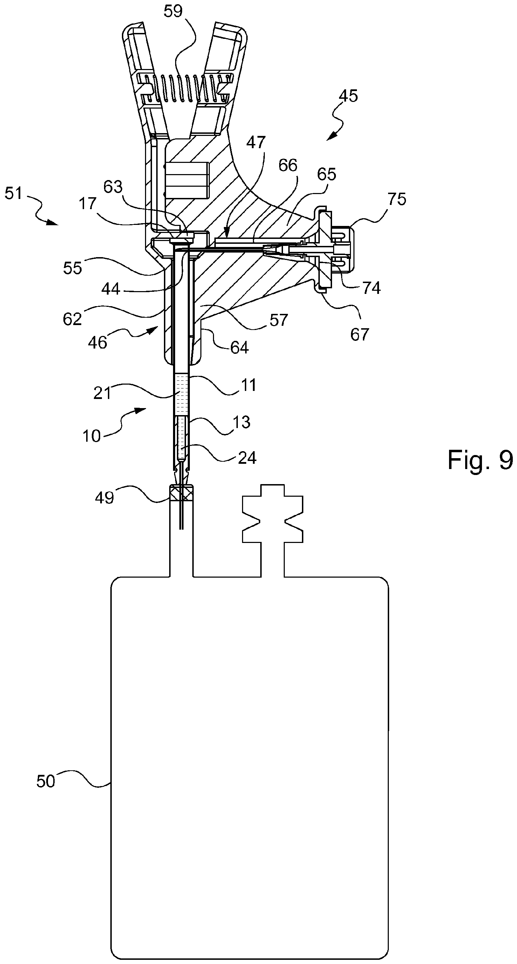

Ainsi qu'expliqué plus en détails ultérieurement, l'aiguille 14 est configurée pour être enfoncée dans le septum 49 d'un récipient, tel qu'une poche de dilution 50, contenant un liquide de dilution (par exemple de l'eau pour injection) pour solution de vaccin concentrée (figure 9).

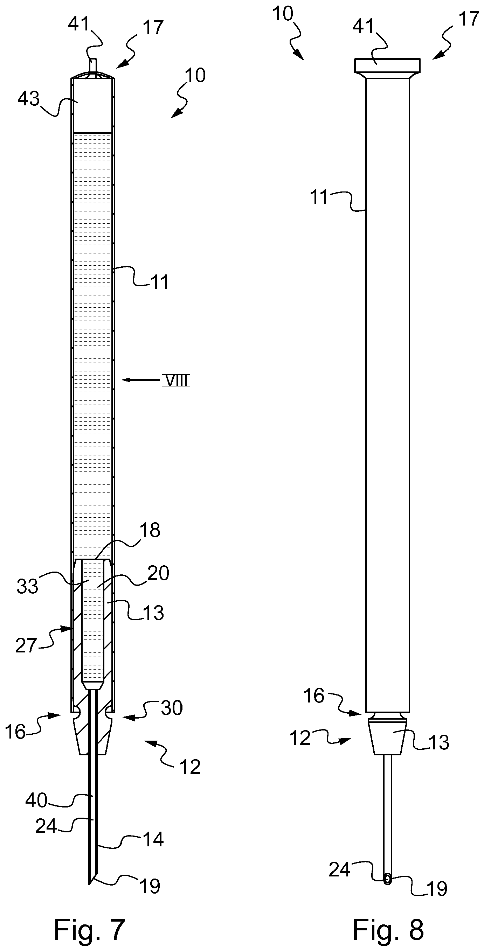

En outre, si besoin, la portion du tube 11 entourant l'aiguille 14 peut être découpée et enlevée, comme montré sur les figures 7 et 8.

Avant l'état initial de la paillette 10 illustré sur les figures 1 et 2, ni la première extrémité 16 ni la seconde extrémité 17 du tube 11 ne sont soudées, et l'extrémité distale 19 de l'aiguille 14 est située dans le tube 11 à une certaine distance de la première extrémité 16 du tube 11.

Cette distance a été prédéterminée afin qu'elle soit suffisamment grande pour qu'il soit possible de souder le tube 11 au voisinage de l'extrémité 16.

Une fois la première extrémité 16 du tube 11 soudée, la paillette 10 se trouve à l'état initial illustré sur les figures 1 et 2, où elle est prête à être remplie avec une dose de substance à base liquide qui doit être conservée dans la paillette 10.

En pratique, la paillette 10 est fournie à l'utilisateur à l'état initial.

La substance à base liquide est ici une solution de vaccin concentrée.

A l'état rempli de la paillette 10 (figure 3), la dose de substance 21 à base liquide est disposée entre le bouchon 13 et l'extrémité 17 du tube 11 la plus éloignée du bouchon 13.

La paillette 10 illustrée sur les figures 1 à 3 a ici une capacité utile d'environ 2 ml.

La mise en œuvre de l'opération de remplissage sera expliquée ultérieurement.

Après remplissage, le tube 11 de la paillette 10 est soudé au voisinage de sa seconde extrémité 17 (figure 3) et est stockée au froid. La paillette 10 est par exemple plongée dans un bain d'un agent cryogénique à l'état liquide, tel que l'azote liquide, pour congeler la substance 21. Dans le bain, la paillette 10 est disposée dans une position debout, la pointe de l'aiguille 14 tournée vers le haut.

La mise en œuvre du vidage de la paillette 10, le cas échéant après décongélation et découpage d'une ou des deux portions d'extrémité soudées, sera expliquée ultérieurement.

Bien entendu, si le tube 11 a été soudé à une extrémité et que la portion soudée a ensuite été découpée et enlevée, le tube 11 a alors une nouvelle extrémité en retrait par rapport à l'extrémité initiale. De même, si le tube 11 a été découpé pour enlever une portion d'extrémité initialement située autour de l'aiguille 14, le tube 11 a alors une nouvelle extrémité en retrait par rapport à l'extrémité initiale. Pour simplifier, dans la suite on emploiera également la référence numérique 16 pour la nouvelle extrémité du tube 11 ainsi en retrait par rapport à l'extrémité initiale.

Lors de la fabrication de la paillette 10, l'insert 12 est mis en place dans le tube 11 par simple insertion au travers de la première extrémité 16 du tube 11 et coulissement forcé vers la seconde extrémité 17 du tube 11 jusqu'à atteindre l'emplacement prévu pour l'insert 12 dans le tube 11.

Le fait que le bouchon 13 ne peut coulisser dans le tube 11 que si un effort important est exercé (caractère forcé de ce coulissement) permet de fournir une tenue en place du bouchon 13 dans le tube 11 suffisante pour reprendre les efforts exercés lors de l'enfoncement de l'aiguille 14 dans le septum 49 de la poche de dilution 50 (figure 9).

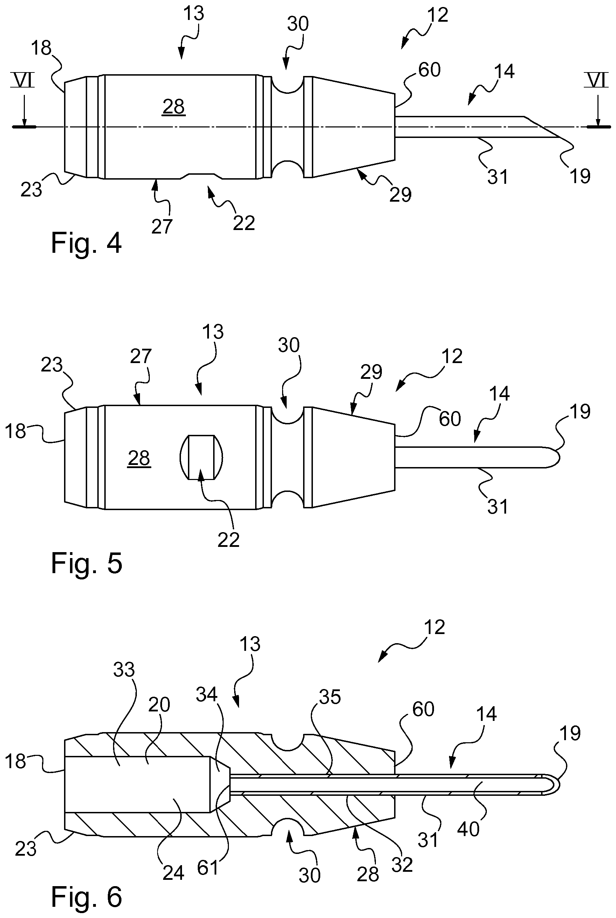

On décrit ci-après plus en détails l'insert 12, à l'appui des figures 4 à 6.

Le bouchon 13 a ici une longueur de l'ordre de 20 mm.

Le conduit interne 20 présente une première portion 33 cylindrique qui s'étend depuis la seconde extrémité 18 du bouchon 13, et une deuxième portion 34 tronconique qui s'étend en diminuant de diamètre depuis la première portion 33 jusqu'à l'extrémité 61 de l'aiguille 14.

La portion 33 du conduit interne 20 débouche au travers de l'extrémité 18 du bouchon 13. La portion 33 du conduit interne 20 a ici une longueur de l'ordre de 8,80 mm, et un diamètre de l'ordre de 3,4 mm.

Le bouchon 13 présente une surface externe latérale 28 s'étendant depuis la première extrémité 60 jusqu'à la seconde extrémité 18 du bouchon 13.

La matière dans laquelle est faite le bouchon 13 est relativement rigide et en tout cas davantage que la paroi du tube 11 qui est relativement mince.

La surface externe latérale 28 a une première portion 27, cylindrique.

Le bouchon 13 présente un renfoncement 22 en retrait par rapport à la première portion 27 de la surface externe 28.

Lors de la fabrication du bouchon 13, le point d'injection de la matière est situé dans le renfoncement 22, afin d'éviter qu'il existe de la matière en saillie de la portion 27.

Pour immobiliser le bouchon 13, et plus généralement l'insert 12 par rapport au tube 11, la portion 27 est en contact serré avec la surface interne du tube 11 de la paillette 10.

Pour obtenir ce contact serré, le diamètre général de la surface externe 28 dans la première portion 27 (diamètre de la surface 28 en dehors du renfoncement 22) est supérieur au diamètre interne du tube 11, ici de l'ordre de 0,1 mm.

La surface externe latérale 28 a en outre une deuxième portion 29 tronconique formant un appendice s'étendant depuis la première extrémité 60 du bouchon 13 en augmentant de diamètre vers la seconde extrémité 18 du bouchon 13.

On notera ici que la portion cylindrique 27 de la surface 28 et la surface interne du tube 11 ont un état de surface tel que leur zone de contact est étanche aux gaz et aux liquides.

Le bouchon 13 présente en outre une gorge annulaire 30, ménagée sur la surface externe 28 à proximité de la première extrémité 60.

Plus précisément, la gorge annulaire 30 est ménagée entre la première extrémité 60 et la première portion 27 cylindrique, et encore plus précisément entre la deuxième portion 29 tronconique et la première portion cylindrique 27.

La gorge annulaire 30 présente une surface de fond incurvée concave.

La gorge annulaire 30 est utile pour guider le découpage du tube 11, par exemple avec une paire de ciseaux à lames courbées.

Pour plus de détails, on pourra se référer à la demande de brevet français 3 036 954 susmentionnée.

Le bouchon 13 présente encore, à l'extrémité 18, un bord chanfreiné formant une surface de guidage 23 inclinée vers l'intérieur et vers l'extrémité 18 du bouchon 13.

La surface de guidage 23 permet de faciliter l'insertion de l'insert 12 au travers de la première extrémité 16 du tube 11 lors de la fabrication de la paillette 10.

On va maintenant décrire plus en détails l'aiguille 14.

La partie de l'aiguille 14 saillant du bouchon 13 a ici une longueur de l'ordre de 10 mm. La partie de l'aiguille 14 surmoulée par le bouchon 13 a ici une longueur de l'ordre de 10 mm.

On notera ici que le conduit interne 20 du bouchon 13 et le canal interne 40 de l'aiguille 14 forment ensemble un conduit interne 24 de l'insert 12, lequel conduit interne 24 s'étend entre la première extrémité 19 de l'insert 12 (extrémité distale 19 de l'aiguille 14) et la seconde extrémité 18 de l'insert 12 (seconde extrémité 18 du bouchon 13).

Plus précisément, le canal interne 40 de l'aiguille 14 forme la portion du conduit interne 24 qui s'étend entre la première extrémité 19 de l'insert 12 et l'extrémité proximale 61 de l'aiguille 14, tandis que le conduit interne 20 du bouchon 13 forme la portion du conduit interne 24 qui s'étend entre l'extrémité proximale 61 de l'aiguille 14 et la seconde extrémité 18 du bouchon 13.

Le conduit interne 24 traverse ainsi l'aiguille 14 et le bouchon 13 en débouchant dans l'espace interne au tube 11 prévu pour être rempli par la substance 21.

D'une manière générale, le conduit interne 24 relie fluidiquement (c'est-à-dire établit une communication fluidique entre) les espaces internes au tube 11 situés de part et d'autre de l'insert 12.

On notera que dans l'état initial de la paillette 10, où elle est prête à être remplie, le conduit interne 24 est ouvert. Autrement dit le conduit interne 24 établit une communication fluidique entre l'espace interne au tube 11 situé entre la première extrémité 60 du bouchon 13 et la première extrémité 16 du tube 11 (espace dans lequel se trouve la portion saillante de l'aiguille 14) et l'espace interne au tube 11 situé entre la seconde extrémité 18 du bouchon 13 et la seconde extrémité 17 du tube 11 (espace prévu pour être rempli par la substance 21).

Afin de pouvoir accéder à l'aiguille 14, par exemple pour l'enfoncer dans le septum 49 de la poche de dilution 50, le tube 11 est découpé au voisinage de sa première extrémité 16, puis la portion d'extrémité du tube 11 qui comporte la première extrémité 16 est enlevée.

On notera que pour enfoncer l'aiguille 14 dans le septum 49, l'utilisateur peut se saisir de la paillette 10 par la portion du tube 11 qui est au contact de la première portion 27 de la surface externe 28, puisque la première portion 27 est en majeure partie lisse, les déformations du tube 11 sont limitées lorsqu'on exerce une pression sur ce dernier au niveau de la première portion 27, en particulier lorsqu'on enfonce l'aiguille 14 dans le septum 49. Ceci est favorable à la préservation d'un contact étanche entre le tube 11 et la première portion 27.

Les figures 7 à 10 illustrent une variante de la paillette 10, similaire à celle décrite ci-dessus (ayant en particulier la même capacité utile de 2 ml) sauf que le tube 11 et l'insert 12 sont dimensionnés différemment.

Dans cette variante, le bouchon 13 a une longueur de l'ordre de 30 mm ; la première portion 33 du conduit interne 20 a une longueur de l'ordre de 18,80 mm ; la partie de l'aiguille 14 saillant du bouchon 13 a une longueur de l'ordre de 20 mm ; et le tube 11 a un diamètre interne de l'ordre de 6,30 mm.

La longueur du tube 11, la longueur de la partie de l'aiguille 14 surmoulée par le bouchon 13, le diamètre de la première portion 33 du conduit interne 20 et le diamètre du canal interne 40 de l'aiguille 14 sont inchangés.

On va maintenant décrire l'utilisation de la paillette 10 à l'appui des figures 1 à 9.

La paillette 10 illustrée sur les figures 1 et 2 est à l'état initial, avant utilisation, l'espace entre la seconde extrémité 18 du bouchon 13 et la seconde extrémité 17 du tube 11 étant vide (cet espace ne contient que de l'air), le tube 11 étant soudé à sa première extrémité 16 et ouvert à sa seconde extrémité 17.

Le remplissage de la paillette 10 s'effectue à l'aide d'une aiguille de remplissage (non illustrée), reliée à un réservoir (non illustré) de substance 21, que l'on insère dans le tube 11 par l'extrémité 17 du tube 11 jusqu'à ce que son extrémité vienne à proximité du bouchon 13.

Lors de l'injection de la substance 21, l'aiguille de remplissage est progressivement rétractée.

On notera qu'ici, du fait de la soudure de la première extrémité 16 du tube 11 et du caractère étroit du canal interne 40 de l'aiguille 14, la substance 21 pénètre dans le conduit interne 20 du bouchon 13 mais ne pénètre pas, ou extrêmement peu, à l'intérieur du canal interne 40 de l'aiguille 14, et ce bien que le canal interne 40 débouche dans l'espace interne du tube 11 à l'extrémité distale 19 de l'aiguille 14.

Autrement dit, la paillette 10 est configurée de sorte que la dose de substance 21 à base liquide ne s'écoule pas au travers du conduit interne 24 lorsque la première extrémité 16 du tube 11 est soudée et la seconde extrémité 17 du tube 11 est ouverte.

Du fait de la fermeture par soudure de la première extrémité 16 du tube 11 et du contact étanche aux gaz et aux liquides entre le tube 11 et le bouchon 13, l'espace interne au tube 11 situé entre la première extrémité 16 du tube 11 et la première extrémité 60 du bouchon 13 est fermé avec comme seule issue le conduit interne 24 de l'insert, qui est ouvert.

Lorsqu'on remplit la paillette 10, les forces capillaires dans le conduit 24 et/ou la compression de l'air emprisonné dans l'espace interne au tube 11 situé entre la première extrémité 16 du tube 11 et la première extrémité 60 du bouchon 13 s'opposent à la progression de la substance dans le conduit de l'insert.

Il n'est donc pas utile de fermer le conduit 24 pour éviter que la substance 21 traverse l'insert 12 et vienne dans l'espace interne au tube situé entre la première extrémité du tube et la première extrémité du bouchon.

On notera encore que le volume de la dose prédéterminée injecté est tel qu'il reste une portion du tube 11 non remplie par la substance 21 du côté de l'extrémité 17.

Le tube 11 est ensuite soudé au voisinage de sa seconde extrémité 17.

La paillette 10 est alors à l'état rempli illustré sur la figure 3, où le tube 11 est fermé à chaque extrémité par une soudure 41.

Ici, chaque soudure 41 est réalisée à l'aide de deux mâchoires chauffantes (non illustrées) entre lesquelles est écrasée par pincement une portion d'extrémité du tube 11. La portion ainsi écrasée prend une position aplatie en formant deux lèvres mises en contact l'une de l'autre. Simultanément à l'écrasement, la chaleur transmise par les mâchoires chauffantes à la matière du tube 11 (ici du Surlyn^{®}) entraîne la formation de la soudure hermétique 41 entre les deux lèvres.

On notera que, du fait qu'il reste une portion du tube 11 non remplie avec la substance 21, une bulle d'air 43 d'un volume prédéterminé est emprisonnée dans le tube 11 entre la soudure 41 au voisinage de l'extrémité 17 et la dose de substance 21.

Cette bulle d'air 43 est utile lors de la congélation de la paillette pour permettre l'augmentation de volume de la substance 21.

On va maintenant décrire le vidage de la paillette 10 à l'appui des figures 7 à 9.

Pour vider la paillette 10, on découpe d'abord le tube 11 entre sa première extrémité 16 et la première portion cylindrique 27 de la surface externe 28 du bouchon 13, puis on enlève la portion d'extrémité du tube 11 qui a été découpée. Le tube 11 est ici plus précisément découpé au niveau de la gorge annulaire 30 du bouchon 13.

La paillette 10 est disposée debout, avec la pointe 19 de l'aiguille 14 qui est tournée vers le bas. Autrement dit, la paillette 10 est disposée de sorte que l'extrémité distale 19 de l'aiguille 14 est tournée vers le bas et la seconde extrémité 17 du tube 11 est tournée vers le haut.

La paillette 10 est alors dans l'état illustré sur les figures 7 et 8.

De même que pour une ampoule tenue debout avec une extrémité ouverte située en bas et une extrémité fermée située en haut, la substance 21 ne s'écoule pas au travers du conduit interne 24.

L'aiguille 14 est ensuite, par exemple, enfoncée dans le septum 49 de la poche de dilution 50 (figure 9).

De cette manière, on établit une communication fluidique entre l'aiguille de vidage 14 et la poche de dilution 50.

Pour que la substance 21 puisse s'écouler au travers du conduit interne 24, le compartiment de la paillette 10 contenant la substance 21 doit être mis à l'atmosphère.

Pour ce faire, ici, une ouverture 44 est pratiquée au niveau de la bulle d'air 43, qui se situe au voisinage de l'extrémité 17 du tube 11 qui est tournée vers le haut.

Une fois l'ouverture 44 pratiquée, on laisse la substance 21 à base liquide s'écouler de manière gravitaire au travers du conduit interne 24.

On notera que pour que la substance 21 puisse s'écouler, l'aiguille de vidage 14 est au moins partiellement au-dessus de la poche de dilution 50.

La paillette 10 illustrée sur la figure 9 est montrée dans un état où elle est partiellement vidée de la dose de substance 21, qui s'écoule dans la poche de dilution 50 où elle se mélange au liquide de dilution (pour simplifier, le contenu de la poche 50 n'est pas illustré).

Le vidage s'effectue ainsi de façon gravitaire, sans avoir d'action à effectuer par l'utilisateur, ce qui est particulièrement simple et commode.

Au surplus, cela offre l'avantage de minimiser le stress subi par la substance qui a été conservée dans la paillette 10, ce qui est particulièrement avantageux lorsqu'il s'agit de substance biologique, par exemple du vaccin concentré.

Ici, la vitesse d'écoulement de la substance 21 est relativement lente, ce qui est favorable à la minimisation du stress subi par la substance 21.

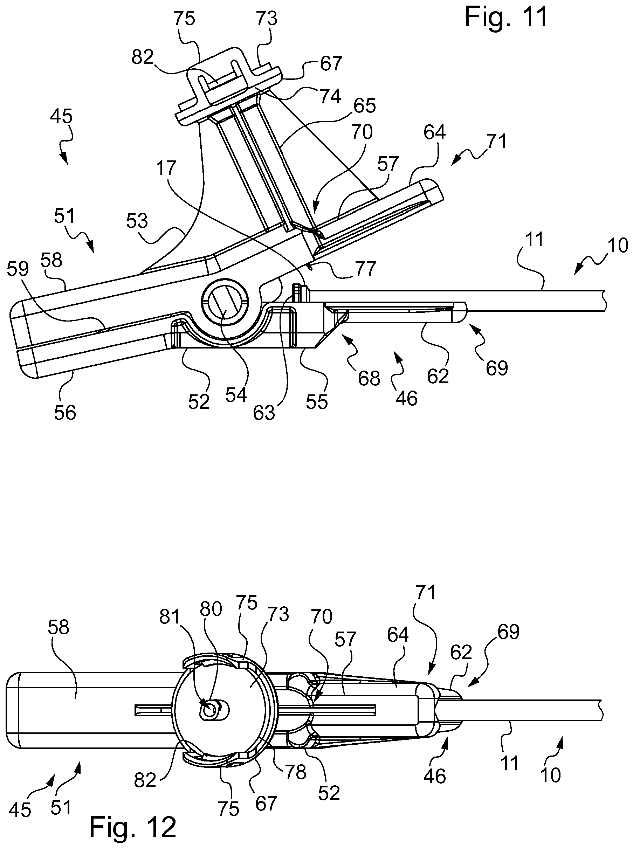

Pour pratiquer l'ouverture 44, on emploie ici un dispositif de mise à l'atmosphère 45 qui va être décrit ci-après en référence aux figures 9 à 12.

Le dispositif de mise à l'atmosphère 45 comporte un organe de positionnement 46 de la paillette 10 configuré pour recevoir la paillette 10 dans une position prédéterminée, et un organe d'ouverture 47 de la paillette 10 configuré pour pratiquer une ouverture dans le tube 11 de la paillette 10 lorsque la paillette 10 est reçue dans l'organe de positionnement 46 dans la position prédéterminée.

L'organe d'ouverture 47 est ici configuré pour pratiquer une ouverture au voisinage de l'extrémité 17 du tube 11, afin que l'ouverture 44 se situe au niveau de la bulle d'air 43.

Le dispositif de mise à l'atmosphère 45 comporte une pince 51 pourvue d'une première branche 52 et d'une deuxième branche 53 montées mobiles en rotation l'une par rapport à l'autre au niveau d'une articulation 54 de la pince 51.

La première branche 52 comporte une première mâchoire 55 et une première patte de préhension 56 s'étendant l'une et l'autre depuis l'articulation 54 et de part et d'autre de cette dernière.

La deuxième branche 53 comporte une deuxième mâchoire 57 et une deuxième patte de préhension 58 s'étendant l'une et l'autre depuis l'articulation 54 et de part et d'autre de cette dernière.

Pour chacune des branches 52 et 53, la patte de préhension et la mâchoire respectives s'étendent selon des directions générales inclinées l'une par rapport à l'autre.

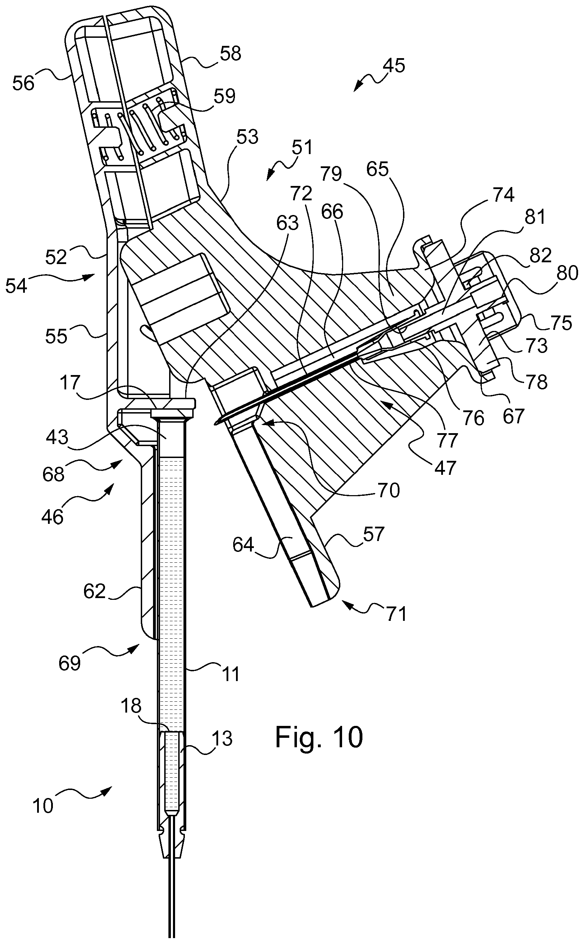

La pince 51 est ainsi configurée de sorte que lorsque les pattes de préhension 56 et 58 sont rapprochées l'une de l'autre, les mâchoires 55 et 57 s'éloignent l'une de l'autre pour ouvrir la pince 51 (figures 10 à 12) ; tandis que lorsque les pattes de préhension 56 et 58 sont écartées l'une de l'autre, les mâchoires 55 et 57 se rapprochent l'une de l'autre pour fermer la pince 51 (figure 9).

La pince 51 comporte en outre un organe élastique, ici formé par un ressort hélicoïdal 59, interposé entre les pattes de préhension 56 et 58, et configuré pour se déformer lorsque ces dernières sont rapprochées l'une de l'autre à l'encontre du ressort 59.

La pince 51 est ainsi configurée pour se refermer automatiquement lorsque les mâchoires 55 et 57 ont été éloignées l'une de l'autre pour ouvrir la pince 51.

La première mâchoire 55 comporte une première gouttière 62 s'étendant longitudinalement entre une première extrémité 68 tournée vers l'articulation 54 et une deuxième extrémité 69 tournée à l'opposé de l'articulation 54 ; ainsi qu'une paroi de butée 63 située entre la première extrémité 68 de la gouttière 62 et l'articulation 54.

La paroi de butée 63 se situe plus précisément dans le prolongement de la gouttière 62, et s'étend transversalement à la direction longitudinale d'extension de la gouttière 62.

Le fond de la gouttière 62 a en section une forme en U dont la concavité est dirigée vers la deuxième mâchoire 57.

La gouttière 62 est configurée pour recevoir la paillette 10 avec son tube 11 positionné contre le fond de la gouttière 62.

La forme en U du fond correspond sensiblement au contour extérieur du tube 11 de sorte que la paillette 10 est reçue dans la gouttière 62 selon une orientation prédéterminée fixe.

Plus précisément, la paillette 10 est orientée sensiblement parallèlement à la direction longitudinale d'extension de la gouttière 62, et transversalement à la direction de rapprochement / écartement des mâchoires 55 et 57 de la pince 51.

La paillette 10 présente cette orientation prédéterminée lorsqu'elle est dans la position prédéterminée.

La paroi de butée 63 est configurée pour limiter l'enfoncement de la paillette 10 dans la gouttière 62 lorsque la paillette 10 a atteint la position prédéterminée.

La première gouttière 62 et la paroi de butée 63 forment ainsi ensemble l'organe de positionnement 46 de la paillette 10.

La deuxième mâchoire 57 comporte une deuxième gouttière 64 s'étendant longitudinalement entre une première extrémité 70 tournée vers l'articulation 54 et une deuxième extrémité 71 tournée à l'opposé de l'articulation 54.

La gouttière 64 présente une concavité dirigée vers la première mâchoire 55.

Lorsque la pince 51 est fermée, la première gouttière 62 et la deuxième gouttière 64 s'étendent le long l'une de l'autre.

Lorsque la pince 51 est dans une configuration ouverte dans laquelle les mâchoires 55 et 57 sont à l'écart l'une de l'autre, la paillette 10 peut être disposée entre les mâchoires (figure 10).

Plus précisément, la seconde extrémité 17 du tube 11 de la paillette 10 est introduite dans la première gouttière 62 et glissée dans cette dernière jusqu'à ce que la seconde extrémité 17 du tube 11 soit au contact de la paroi de butée 63.

La paillette 10 est ainsi disposée dans la position prédéterminée.

Si la pince 51 est alors passée dans une configuration fermée dans laquelle les mâchoires 55 et 57 sont à proximité l'une de l'autre (figure 9), ces dernières maintiennent la paillette 10 dans la gouttière 62, contre la butée 63, et donc dans la position prédéterminée.

La première gouttière 62 et la deuxième gouttière 64 reçoivent alors chacune une portion respective du tube 11 de la paillette 10.

La deuxième branche 53 comporte en outre une cheminée 65 saillant de la deuxième mâchoire 57 et s'étendant sensiblement perpendiculairement à cette dernière, ainsi qu'une plate-forme 67 située sur l'extrémité de la cheminée 65 opposée à la deuxième mâchoire 57.

Lorsque la pince 51 est fermée (figure 9), la cheminée 65 s'étend en outre sensiblement perpendiculairement à la première mâchoire 55.

La cheminée 65 est pourvue d'un conduit 66 traversant débouchant au pied de la cheminée 65 vers la mâchoire 55, et au sommet de la cheminée 65 à travers la plate-forme 67.

La plate-forme 67 présente une portion centrale 74, sensiblement circulaire, et deux pattes d'encliquetage 75 s'étendant transversalement depuis le bord externe la portion centrale 74 et disposées en regard l'une de l'autre.

Les pattes d'encliquetage 75 présentent des saillies internes 82 s'étendant en regard de la portion centrale 74.

Lorsque la pince 51 est fermée (figure 9), le conduit 66 débouche au pied de la cheminée 65, au droit d'un espace situé, suivant la direction générale d'extension de la mâchoire 55, entre la paroi de butée 63 et la première extrémité 68 de la gouttière 62.

La cheminée 65 et la plate-forme 67 de la deuxième branche 53 sont configurées pour monter l'organe d'ouverture 47 sur la deuxième mâchoire 57.

Le dispositif de mise à l'atmosphère 45 comporte en outre une aiguille de ventilation 72 et un filtre à air 73 raccordé à l'aiguille 72, formant ici l'organe d'ouverture 47.

L'aiguille 72 comporte un embout de raccordement femelle 76 et une tige creuse 77 saillant de l'embout femelle 76.

La tige creuse 77 est ici similaire à celle formant l'aiguille 14 de l'insert 12.

La tige creuse 77 présente un canal interne s'étendant depuis l'embout femelle 76 jusqu'à la pointe de la tige creuse 77.

Le filtre à air 73 est un élément axisymétrique présentant une partie de filtration 78 sensiblement en forme de disque, un embout de raccordement mâle 79 et une collerette d'entrée 80 disposés coaxialement.

L'embout mâle 79 et la collerette 80 saillent de part et d'autre de la partie de filtration 78.

Le filtre 73 présente en outre un canal interne 81 traversant délimité successivement par la collerette 80, la partie de filtration 78 et l'embout mâle 79.

Le filtre à air 73 est configuré pour filtrer l'air entrant par la collerette 80, traversant la partie de filtration 78 et sortant par l'embout mâle 79.

L'aiguille 72 est raccordée au filtre à air 73 par engagement de l'embout de raccordement femelle 76 de l'aiguille 72 sur l'embout de raccordement mâle 79 du filtre 73.

Les embouts de raccordement mâle 79 et femelle 76 sont ici du type Luer, défini par la norme ISO 594-1:1986 ou par les normes DIN et EN 1707:1996 et 20594-1:1993.

Le filtre à air 73 est raccordé en entrée du canal interne de la tige creuse 77 de l'aiguille 72, dont la sortie se trouve à la pointe de la tige creuse 77 de l'aiguille 72.

L'organe d'ouverture 47 est monté sur la deuxième mâchoire 57 de la pince 51 de telle sorte que l'aiguille 72 est reçue dans le conduit 66 de la cheminée 65, tandis que la partie de filtration 78 du filtre à air 73 est disposée contre la portion centrale 74, entre les pattes d'encliquetage 75.

La partie de filtration 78 est en outre prise en sandwich entre la portion centrale 74 et les saillies internes 82 des pattes d'encliquetage 75 de la plate-forme 67, de sorte que l'organe d'ouverture 47 est immobilisé.

On notera que pour démonter l'organe d'ouverture 47 de la mâchoire 57, par exemple pour nettoyer et/ou changer le filtre à air 73 et/ou l'aiguille 72, il suffit d'écarter les pattes d'encliquetage 75, qui sont flexibles, pour dégager la partie de filtration 78 des saillies internes 82.

L'aiguille 72 est configurée pour transpercer le tube 11 de la paillette 10 de sorte à pratiquer l'ouverture 44.

Lorsque les mâchoires 55 et 57 sont rapprochées l'une de l'autre pour faire passer la pince 51 de sa configuration ouverte à sa configuration fermée, la pointe de la tige creuse 77 transperce le tube 11 de la paillette 10, ce qui pratique l'ouverture 44 dans le tube 11.

La tige creuse 77 saille dans l'espace interne du tube 11 de sorte que sa pointe se situe dans l'espace interne du tube 11, ce qui établit une communication fluidique entre l'intérieur et l'extérieur du tube 11 au travers du canal interne de la tige creuse 77 et, ici, également au travers du canal interne 81 du filtre 73.

On notera que puisque la tige creuse 77 traverse l'ouverture 44, on peut considérer que la communication fluidique est établie au travers de cette ouverture 44.

Le filtre à air 73, situé en entrée du canal interne de l'aiguille 72, est configuré pour filtrer l'air extérieur s'introduisant à l'intérieur du tube 11 de la paillette 10 au travers du canal interne. Le filtre à air 73 est en particulier configuré pour filtrer les éventuels agents infectieux présents dans l'air et qui pourraient contaminer la substance 21 lors du vidage de la paillette 10.

On notera encore que la pince 51 est configurée de sorte que lorsqu'elle est en configuration fermée, la pointe de la tige creuse 77 est située à proximité de la paroi de butée 63, de sorte que l'ouverture 44 est pratiquée à proximité de l'extrémité 17 du tube 11 qui est en appui sur la paroi de butée 63, ce qui permet de percer le tube 11 au niveau de la bulle d'air 43.

La paillette 10 et le dispositif de mise à l'atmosphère 45 forment ensemble un système pour délivrer la dose prédéterminée de substance 21 à base liquide reçue dans la paillette 10.

Dans des variantes non illustrées :
- la paillette a une capacité utile différente de 2 ml, par exemple 4 ml, les dimensions du tube et/ou de l'insert étant adaptées en conséquence, le diamètre interne du tube étant par exemple plus grand ; et plus généralement les dimensions de la paillette sont différentes de celles mentionnées ci-dessus et illustrées sur les dessins ;
- le bouchon est dépourvu d'un renfoncement en retrait par rapport à la surface externe et le point d'injection se situe ailleurs qu'au niveau de la portion cylindrique de la surface externe ;
- plutôt que de ne s'étendre que partiellement dans le bouchon, l'aiguille le traverse entièrement et saille en outre depuis la seconde extrémité du bouchon de sorte que l'extrémité proximale de l'aiguille est située dans l'espace entre la seconde extrémité du bouchon et la seconde extrémité du tube, l'extrémité proximale de l'aiguille étant aussi la seconde extrémité de l'insert ;
- l'aiguille n'est pas surmoulée par le bouchon mais est par exemple collée au bouchon obtenu indépendamment de l'aiguille ;
- l'aiguille n'est pas réalisée en un matériau métallique, mais par exemple en un matériau plastique ;
- le canal interne de l'aiguille de vidage et/ou de l'aiguille de ventilation ne débouche pas à la pointe de l'aiguille mais sur le côté de l'aiguille en un point situé en retrait de la pointe de l'aiguille ;
- l'ouverture de mise à l'atmosphère de la paillette est pratiquée par découpage d'une portion d'extrémité du tube comportant la seconde extrémité du tube, plutôt que par perforation du tube ;
- l'organe d'ouverture est dépourvu d'un filtre ;
- l'organe d'ouverture est dépourvu d'une aiguille et comporte par exemple une épingle ou une lame ; et/ou
- la paillette est vidée sans le dispositif de mise à l'atmosphère, par exemple manuellement.

De nombreuses autres variantes sont possibles en fonction des circonstances, et l'on rappelle à cet égard que l'invention ne se limite pas aux exemples décrits et représentés.

## Revendications

1. Paillette pour la conservation cryogénique d'une dose prédéterminée de substance à base liquide, comportant un tube (11) s'étendant entre une première extrémité (16) et une seconde extrémité (17), et un bouchon (13) disposé dans ledit tube (11) au voisinage de sa première extrémité (16) et s'étendant entre une première extrémité (60) tournée vers la première extrémité (16) dudit tube (11) et une seconde extrémité (18) tournée vers la seconde extrémité (17) dudit tube (11), ledit bouchon (13) étant fixe par rapport audit tube (11) et étant traversé de sa première extrémité (60) à sa seconde extrémité (18) par un passage (35) ; **caractérisée en ce qu'**elle comporte en outre une aiguille de vidage (14) comportant une première portion (31) saillant de la première extrémité (60) dudit bouchon (13) vers la première extrémité (16) dudit tube (11) et s'étendant jusqu'à une extrémité distale (19) située dans ledit tube (11), et comportant une deuxième portion (32) située dans ledit passage (35) du bouchon (13), ladite aiguille de vidage (14) étant fixée de manière permanente audit bouchon (13) par sa deuxième portion (32), ladite aiguille de vidage (14) et ledit bouchon (13) formant un insert (12) entièrement disposé dans ledit tube (11) et présentant un conduit interne (24) reliant fluidiquement les espaces internes au tube (11) situés de part et d'autre dudit insert (12), ledit conduit interne (24) étant formé au moins partiellement par l'espace interne (40) à l'aiguille de vidage (14), qui est creuse.

2. Paillette selon la revendication 1, **caractérisée en ce que** ladite deuxième portion (32) de l'aiguille de vidage (14) s'étend entre la première extrémité (60) du bouchon (13) et une extrémité proximale (61) située dans le bouchon (13), ledit conduit interne (24) étant formé par ledit passage (35) entre l'extrémité proximale (61) de l'aiguille de vidage (14) et la seconde extrémité (18) du bouchon (13).

3. Paillette selon l'une quelconque des revendications 1 ou 2, **caractérisée en ce qu'**elle est dans un état initial où la première extrémité (16) dudit tube (11) est soudée, la seconde extrémité (17) dudit tube (11) est ouverte, et l'espace entre la seconde extrémité (18) dudit bouchon (13) et la seconde extrémité (17) dudit tube (11) est vide.

4. Paillette selon la revendication 3, **caractérisée en ce que** dans ledit état initial ledit conduit interne (24) dudit insert (12) est ouvert et l'espace entre la première extrémité (60) dudit bouchon (13) et la première extrémité (16) dudit tube (11) ne contient que ladite aiguille de vidage (14).

5. Paillette selon l'une quelconque des revendications 1 ou 2, **caractérisée en ce qu'**elle est dans un état rempli où la première extrémité (16) dudit tube (11) est soudée, la seconde extrémité (17) dudit tube (11) est soudée, et l'espace entre la seconde extrémité (18) dudit bouchon (13) et la seconde extrémité (17) dudit tube (11) contient ladite dose prédéterminée de substance à base liquide.

6. Paillette selon la revendication 5, **caractérisée en ce que** dans ledit état rempli ledit conduit interne (24) dudit insert (12) est ouvert et l'espace entre la première extrémité (60) dudit bouchon (13) et la première extrémité (16) dudit tube (11) ne contient que ladite aiguille de vidage (14).

7. Paillette selon l'une quelconque des revendications 1 à 6, **caractérisée en ce que** ledit bouchon (13) comporte sur sa surface externe une gorge annulaire (30), et comporte de ladite gorge annulaire (30) à ladite première extrémité (60) un appendice (29) dont la surface externe est à l'écart de la surface interne dudit tube (11).

8. Paillette selon l'une quelconque des revendications 1 à 7, **caractérisée en ce que** ledit bouchon (13) comporte sur sa surface externe une portion cylindrique (27) en contact serré avec la surface interne dudit tube (11).

9. Ensemble comportant une paillette selon l'une des revendications 1 à 8 et un dispositif de mise à l'atmosphère (45) de ladite paillette (10) comportant un organe de positionnement (46) de ladite paillette (10) configuré pour recevoir ladite paillette (10) dans une position prédéterminée, et un organe d'ouverture (47) de ladite paillette (10) configuré pour pratiquer une ouverture (44) dans le tube (11) de ladite paillette (10) lorsque ladite paillette (10) est reçue dans ledit organe de positionnement (46) dans ladite position prédéterminée.

10. Ensemble selon la revendication 9, **caractérisé en ce que** ledit organe de positionnement (46) comporte une gouttière (62) configurée pour recevoir ladite paillette (10) selon une orientation prédéterminée que ladite paillette (10) présente lorsqu'elle est dans ladite position prédéterminée, et une paroi de butée (63) située dans le prolongement de ladite gouttière (62) et configurée pour limiter l'enfoncement de ladite paillette (10) dans ladite gouttière (62) lorsque ladite paillette (10) est enfoncée dans ladite gouttière (62) et atteint ladite position prédéterminée.

11. Ensemble selon l'une des revendications 9 ou 10, **caractérisé en ce que** ledit organe d'ouverture (47) comporte une aiguille de ventilation (72) pourvue d'un canal interne et configurée pour transpercer le tube (11) de ladite paillette (10) de sorte à pratiquer ladite ouverture (44) ; et ledit organe d'ouverture (47) comporte en outre un filtre à air (73) situé en entrée dudit canal interne.

12. Ensemble selon l'une des revendications 9 à 11, **caractérisé en ce que** ledit dispositif de mise à l'atmosphère (45) comporte une pince (51) pourvue d'une première mâchoire (55) et d'une deuxième mâchoire (57), ladite pince (51) présentant une configuration ouverte dans laquelle lesdites mâchoires (55, 57) sont à l'écart l'une de l'autre et ladite paillette (10) peut être disposée entre lesdites mâchoires (55, 57), et une configuration fermée dans laquelle lesdites mâchoires (55, 57) sont à proximité l'une de l'autre et sont configurées pour maintenir ladite paillette (10) reçue dans ledit organe de positionnement (46) dans ladite position prédéterminée, ledit organe de positionnement (46) étant situé sur ladite première mâchoire (55) et ledit organe d'ouverture (47) étant situé sur ladite deuxième mâchoire (57), et ladite pince (51) est configurée de sorte que ledit organe d'ouverture (47) pratique ladite ouverture (44) dans le tube (11) de ladite paillette (10) lorsque lesdites mâchoires (55, 57) sont rapprochées l'une de l'autre pour faire passer ladite pince (51) de sa configuration ouverte à sa configuration fermée.

13. Procédé pour vider une paillette selon l'une quelconque des revendications 1, 2, 5 ou 6, comportant les étapes de :
- sélectionner une dite paillette (10) où la seconde extrémité (17) dudit tube (11) est soudée, et l'espace entre la seconde extrémité (18) dudit bouchon (13) et la seconde extrémité (17) dudit tube (11) contient ladite dose prédéterminée de substance (21) à base liquide ;
- établir une communication fluidique entre ladite aiguille de vidage (14) et un récipient (50) dans lequel doit être transféré ladite dose prédéterminée de substance à base liquide, avec ladite paillette (10) qui est disposée de sorte que l'extrémité distale (19) de ladite aiguille de vidage (14) est tournée vers le bas en étant au moins partiellement au-dessus dudit récipient et que la seconde extrémité (17) dudit tube (11) est tournée vers le haut ;
- pratiquer une ouverture (44) dans le tube (11) de ladite paillette (10) pour mettre à l'atmosphère ladite dose prédéterminée de substance à base liquide, et laisser ladite substance (21) à base liquide s'écouler de manière gravitaire au travers du conduit interne (24) dudit insert (12).

14. Procédé selon la revendication 13, **caractérisé en ce qu'**il comporte l'étape de sélectionner ladite paillette (10) avec une bulle d'air (43) emprisonnée entre la dose de substance (21) à base liquide et la seconde extrémité (17) dudit tube (11) et l'étape de pratiquer ladite ouverture (44) au niveau de ladite bulle d'air (43).

15. Procédé selon l'une des revendications 13 ou 14, **caractérisé en ce que**, avant de pratiquer ladite ouverture (44), ladite aiguille de vidage (14) est enfoncée dans un septum (49) dudit récipient (50).

## Patentansprüche

1. Röhrchen zur kryogenen Aufbewahrung einer vorbestimmten Dosis einer flüssigkeitsbasierten Substanz, enthaltend ein Rohrstück (11), das sich zwischen einem ersten Ende (16) und einem zweiten Ende (17) erstreckt, und einen Stopfen (13), der in dem Rohrstück (11) nahe an seinem ersten Ende (16) angeordnet ist und sich zwischen einem dem ersten Ende (16) des Rohrstücks (11) zugewandten ersten Ende (60) und einem dem zweiten Ende (17) des Rohrstücks (11) zugewandten zweiten Ende (18) erstreckt, wobei der Stopfen (13) bezüglich des Rohrstücks (11) fest ist und von seinem ersten Ende (60) zu seinem zweiten Ende (18) von einem Durchgang (35) durchsetzt ist; **dadurch gekennzeichnet, dass** es ferner eine Ablassnadel (14) enthält, die einen ersten Abschnitt (31) aufweist, der vom ersten Ende (60) des Stopfens (13) in Richtung des ersten Endes (16) des Rohrstücks (11) vorsteht und sich zu einem in dem Rohrstück (11) befindlichen, distalen Ende (19) erstreckt, sowie einen zweiten Abschnitt (32), der sich in dem Durchgang (35) des Stopfens (13) befindet, wobei die Ablassnadel (14) mit ihrem zweiten Abschnitt (32) dauerhaft an dem Stopfen (13) fixiert ist, wobei die Ablassnadel (14) und der Stopfen (13) einen Einsatz (12) bilden, der vollständig in dem Rohrstück (11) angeordnet ist und eine innere Leitung (24) aufweist, die die beiderseits des Einsatzes (12) befindlichen Innenräume des Rohrstücks (11) strömungsmäßig verbindet, wobei die innere Leitung (24) zumindest teilweise aus dem Innenraum (40) der hohl ausgebildeten Ablassnadel (14) gebildet ist.

2. Röhrchen nach Anspruch 1, **dadurch gekennzeichnet, dass** der zweite Abschnitt (32) der Ablassnadel (14) sich zwischen dem ersten Ende (60) des Stopfens (13) und einem in dem Stopfen (13) befindlichen, proximalen Ende (61) erstreckt, wobei die innere Leitung (24) aus dem Durchgang (35) zwischen dem proximalen Ende (61) der Ablassnadel (14) und dem zweiten Ende (18) des Stopfens (13) gebildet ist.

3. Röhrchen nach einem der Ansprüche 1 oder 2, **dadurch gekennzeichnet, dass** es in einem Ausgangszustand vorliegt, in dem das erste Ende (16) des Rohrstücks (11) verschweißt ist, das zweite Ende (17) des Rohrstücks (11) offen ist und der Raum zwischen dem zweiten Ende (18) des Stopfens (13) und dem zweiten Ende (17) des Rohrstücks (11) leer ist.

4. Röhrchen nach Anspruch 3, **dadurch gekennzeichnet, dass** im Ausgangszustand die innere Leitung (24) des Einsatzes (12) offen ist und der Raum zwischen dem ersten Ende (60) des Stopfens (13) und dem ersten Ende (16) des Rohrstücks (11) nur die Ablassnadel (14) enthält.

5. Röhrchen nach einem der Ansprüche 1 oder 2, **dadurch gekennzeichnet, dass** es in einem Füllzustand vorliegt, in dem das erste Ende (16) des Rohrstücks (11) verschweißt ist, das zweite Ende (17) des Rohrstücks (11) verschweißt ist und der Raum zwischen dem zweiten Ende (18) des Stopfens (13) und dem zweiten Ende (17) des Rohrstücks (11) die vorbestimmte Dosis flüssigkeitsbasierter Substanz enthält.

6. Röhrchen nach Anspruch 5, **dadurch gekennzeichnet, dass** im Füllzustand die innere Leitung (24) des Einsatzes (12) offen ist und der Raum zwischen dem ersten Ende (60) des Stopfens (13) und dem ersten Ende (16) des Rohrstücks (11) nur die Ablassnadel (14) enthält.

7. Röhrchen nach einem der Ansprüche 1 bis 6, **dadurch gekennzeichnet, dass** der Stopfen (13) an seiner Außenfläche eine Ringnut (30) aufweist und von der Ringnut (30) bis zum ersten Ende (60) einen Fortsatz (29) aufweist, dessen Außenfläche von der Innenfläche des Rohrstücks (11) beabstandet ist.

8. Röhrchen nach einem der Ansprüche 1 bis 7, **dadurch gekennzeichnet, dass** der Stopfen (13) an seiner Außenfläche einen zylindrischen Abschnitt (27) in engem Kontakt mit der Innenfläche des Rohrstücks (11) aufweist.

9. Anordnung mit einem Röhrchen nach einem der Ansprüche 1 bis 8 und einer Vorrichtung (45) zum Druckausgleich des Röhrchens (10), enthaltend ein Positionierelement (46) zum Positionieren des Röhrchens (10), das dazu ausgelegt ist, das Röhrchen (10) in einer vorbestimmten Position aufzunehmen, und ein Öffnungselement (47) zum Öffnen des Röhrchens (10), das dazu ausgelegt ist, eine Öffnung (44) in das Rohrstück (11) des Röhrchens (10) dann einzubringen, wenn das Röhrchen (10) in dem Positionierelement (46) in der vorbestimmten Position aufgenommen ist.

10. Anordnung nach Anspruch 9, **dadurch gekennzeichnet, dass** das Positionierelement (46) eine Mulde (62) aufweist, die dazu ausgelegt ist, das Röhrchen (10) in einer vorbestimmten Ausrichtung aufzunehmen, welche das Röhrchen (10) aufweist, wenn es sich in der vorbestimmten Position befindet, sowie eine Anschlagwand (63), die sich in Verlängerung der Mulde (62) befindet und dazu ausgelegt ist, das Eindrücken des Röhrchens (10) in die Mulde (62) zu begrenzen, wenn das Röhrchen (10) in die Mulde (62) eingedrückt wird und die vorbestimmte Position erreicht.

11. Anordnung nach einem der Ansprüche 9 oder 10, **dadurch gekennzeichnet, dass** das Öffnungselement (47) eine Entlüftungsnadel (72) enthält, die mit einem inneren Kanal versehen und dazu ausgelegt ist, das Rohrstück (11) des Röhrchens (10) zu durchstechen, um die Öffnung (44) einzubringen; und dass das Öffnungselement (47) ferner einen Luftfilter (73) aufweist, der sich am Einlass des inneren Kanals befindet.

12. Anordnung nach einem der Ansprüche 9 bis 11, **dadurch gekennzeichnet, dass** die Druckausgleichsvorrichtung (45) eine Klemme (51) mit einer ersten Klemmbacke (55) und einer zweiten Klemmbacke (57) aufweist, wobei die Klemme (51) eine offene Stellung, in der die Klemmbacken (55, 57) voneinander beabstandet sind und das Röhrchen (10) zwischen den Klemmbacken (55, 57) angeordnet werden kann, und eine geschlossene Stellung aufweist, in der die Klemmbacken (55, 57) nahe beieinander liegen und dazu ausgelegt sind, das in dem Positionierelement (46) aufgenommene Röhrchen (10) in der vorbestimmten Position zu halten, wobei sich das Positionierelement (46) an der ersten Klemmbacke (55) und das Öffnungselement (47) an der zweiten Klemmbacke (57) befindet und wobei die Klemme (51) so ausgelegt ist, dass das Öffnungselement (47) die Öffnung (44) in das Rohrstück (11) des Röhrchens (10) dann einbringt, wenn die Klemmbacken (55, 57) einander angenähert werden, um die Klemme (51) aus ihrer offenen Stellung in ihre geschlossene Stellung zu bringen.

13. Verfahren zum Ablassen eines Röhrchens nach einem der Ansprüche 1, 2, 5 oder 6, umfassend die folgenden Schritte:
- Auswählen eines Röhrchens (10), bei dem das zweite Ende (17) des Rohrstücks (11) verschweißt ist und der Raum zwischen dem zweiten Ende (18) des Stopfens (13) und dem zweiten Ende (17) des Rohrstücks (11) die vorbestimmte Dosis flüssigkeitsbasierter Substanz (21) enthält;
- Herstellen einer Strömungsverbindung zwischen der Ablassnadel (14) und einem Behälter (50), in den die vorbestimmte Dosis flüssigkeitsbasierter Substanz überführt werden soll, wobei das Röhrchen (10) so angeordnet ist, dass das distale Ende (19) der Ablassnadel (14) nach unten weist und dabei zumindest teilweise oberhalb des Behälters liegt und dass das zweite Ende (17) des Rohrstücks (11) nach oben weist;
- Einbringen einer Öffnung (44) in das Rohrstück (11) des Röhrchens (10) zum Druckausgleich der vorbestimmten Dosis flüssigkeitsbasierter Substanz und zum Abfließen lassen der flüssigkeitsbasierten Substanz (21) mittels Schwerkraft durch die innere Leitung (24) des Einsatzes (12).

14. Verfahren nach Anspruch 13, **dadurch gekennzeichnet, dass** es den Schritt des Auswählens des Röhrchens (10) mit einer Luftblase (43), die zwischen der Dosis flüssigkeitsbasierter Substanz (21) und dem zweiten Ende (17) des Rohrstücks (11) eingeschlossen ist, und den Schritt des Einbringens der Öffnung (44) im Bereich der Luftblase (43) umfasst.

15. Verfahren nach einem der Ansprüche 13 oder 14, **dadurch gekennzeichnet, dass** vor dem Einbringen der Öffnung (44) die Ablassnadel (14) in ein Septum (49) des Behälters (50) getrieben wird.

## Claims

1. A straw for the cryogenic preservation of a predetermined dose of liquid-based substance, comprising a tube (11) extending between a first end (16) and a second end (17), and a stopper (13) disposed in said tube (11) in the neighborhood of its first end (16) and extending between a first end (60) oriented towards the first end (16) of said tube (11) and a second end (18) oriented towards the second end (17) of said tube (11), said stopper (13) being fixed relative to said tube (11) and being passed through from its first end (60) to its second end (18) by a passage (35); **characterized in that** it further comprises an emptying needle (14) comprising a first portion (31) projecting from the first end (60) of said stopper (13) towards the first end (16) of said tube (11) and extending to a distal end (19) situated in said tube (11), and comprising a second portion (32) situated in said passage (35) of the stopper (13), said emptying needle (14) being permanently fastened to said stopper (13) by its second portion (32), said emptying needle (14) and said stopper (13) forming an insert (12) entirely disposed in said tube (11) and presenting an internal duct (24) fluidically connecting the internal spaces of the tube (11) situated on opposite sides of said insert (12), said internal duct (24) being formed at least partly by the internal space (40) of the emptying needle (14), which is hollow.

2. A straw according to claim 1, **characterized in that** said second portion (32) of the emptying needle (14) extends between the first end (60) of the stopper (13) and a proximal end (61) situated in the stopper (13), said internal duct (24) being formed by said passage (35) between the proximal end (61) of the emptying needle (14) and the second end (18) of the stopper (13).

3. A straw according to any one of claims 1 or 2, **characterized in that** it is in an initial state in which the first end (16) of said tube (11) is welded, the second end (17) of said tube (11) is open, and the space between the second end (18) of said stopper (13) and the second end (17) of said tube (11) is empty.

4. A straw according to claim 3, **characterized in that** in said initial state said internal duct (24) of said insert (12) is open and the space between the first end (60) of said stopper (13) and the first end (16) of said tube (11) only contains said emptying needle (14).

5. A straw according to any one of claims 1 or 2, **characterized in that** it is in a filled state in which the first end (16) of said tube (11) is welded, the second end (17) of said tube (11) is welded, and the space between the second end (18) of said stopper (13) and the second end (17) of said tube (11) contains said predetermined dose of liquid-based substance.

6. A straw according to claim 5, **characterized in that** in said filled state said internal duct (24) of said insert (12) is open and the space between the first end (60) of said stopper (13) and the first end (16) of said tube (11) only contains said emptying needle (14).

7. A straw according to any one of claims 1 to 6, **characterized in that** said stopper (13) comprises an annular groove (30) on its external surface, and comprises from said annular groove (30) to said first end (60) an appendix (29) of which the external surface is away from the internal surface of said tube (11).

8. A straw according to any one of claims 1 to 7, **characterized in that** said stopper (13) comprises a cylindrical portion (27) on its external surface, in tight contact with the internal surface of said tube (11).

9. An assembly comprising a straw according to one of claims 1 to 8 and a device for connection to the atmosphere (45) of said straw (10) comprising a positioning member (46) of said straw (10) configured to receive said straw (10) in a predetermined position, and an opening member (47) of said straw (10) configured to make an opening (44) in the tube (11) of said straw (10) when said straw (10) is received in said positioning member (46) in said predetermined position.

10. An assembly according to claim 9, **characterized in that** said positioning member (46) comprises a channel (62) configured to receive said straw (10) in a predetermined orientation which said straw (10) presents when it is in said predetermined position, and a stop wall (63) situated at a location that is in line with said channel (62) and configured to limit the pushing-in of said straw (10) into said channel (62) when said straw (10) is pushed into said channel (62) and reaches said predetermined position.

11. An assembly according to one of claims 9 or 10, **characterized in that** said opening member (47) comprises a ventilation needle (72) provided with an internal lumen and configured to pierce through the tube (11) of said straw (10) so as to make said opening (44); and said opening member (47) further comprises an air filter (73) situated at an entrance of said internal lumen.

12. An assembly according to one of claims 9 to 11, **characterized in that** said device for connection to the atmosphere (45) comprises a clamp (51) provided with a first jaw (55) and with a second jaw (57), said clamp (51) having an open configuration in which said jaws (55, 57) are away from each other and said straw (10) can be disposed between said jaws (55, 57), and a closed configuration in which said jaws (55, 57) are near each other and are configured to hold said straw (10) received in said positioning member (46) in said predetermined position, said positioning member (46) being situated on said first jaw (55) and said opening member (47) being situated on said second jaw (57), and said clamp (51) is configured such that said opening member (47) makes said opening (44) in the tube (11) of said straw (10) when said jaws (55, 57) are brought towards each other to pass said clamp (51) from its open configuration to its closed configuration.

13. A method for emptying a straw according to any one of claims 1, 2, 5 or 6, comprising the steps of:
- selecting a said straw (10) in which the second end (17) of said tube (11) is welded, and the space between the second end (18) of said stopper (13) and the second end (17) of said tube (11) contains said predetermined dose of liquid-based substance (21);
- establishing fluidic communication between said emptying needle (14) and a vessel (50) into which said predetermined dose of liquid-based substance is to be transferred, said straw (10) being disposed such that the distal end (19) of said emptying needle (14) is oriented downward while being at least partly over said vessel and such that the second end (17) of said tube (11) is oriented upward;
- making an opening (44) in the tube (11) of said straw (10) to connect said predetermined dose of liquid-based substance to atmosphere, and leave said liquid-based substance (21) to run by gravity through the internal duct (24) of said insert (12).

14. A method according to claim 13, **characterized in that** it comprises the step of selecting said straw (10) with an air bubble (43) trapped between the dose of liquid-based substance (21) and the second end (17) of said tube (11) and the step of making said opening (44) at the location of said air bubble (43).

15. A method according to one of claims 13 or 14, **characterized in that**, before making said opening (44), said emptying needle (14) is pushed into a septum (49) of said vessel (50).
